# EUROPÄISCHE PATENTSCHRIFT

(11) **EP 1 858 339 B1**
(45) Veröffentlichungstag und Bekanntmachung des Hinweises auf die Patenterteilung: **02.06.2010**
(21) Anmeldenummer: 06722513.6
(22) Anmeldetag: 22.02.2006
(51) Int. Cl.: A23C 3/033, B01D 61/22, B01D 61/18

(54) **INBETRIEBNAHMEVERFAHREN EINER MILCHENTKEIMUNGSANLAGE UND MILCHENTKEIMUNGSANLAGE**
START-UP METHOD FOR A MILK STERILISATION PLANT AND MILK STERILISATION PLANT
PROCEDE POUR METTRE EN FONCTIONNEMENT UN DISPOSITIF DE STERILISATION DE LAIT, ET DISPOSITIF DE STERILISATION DE LAIT

(30) Priorität: 22.02.2005 DE 102005007941
(43) Veröffentlichungstag der Anmeldung: 28.11.2007
(73) Patentinhaber: Burger, Martin, 70180 Stuttgart (DE)
(72) Erfinder: Burger, Martin, 70180 Stuttgart (DE)
(74) Vertreter: Kohler Schmid Möbus
(86) Internationale Anmeldenummer: PCT/DE2006/000321
(87) Internationale Veröffentlichungsnummer: WO 2006/089527

(56) Entgegenhaltungen:
- WO-A-94/26121
- WO-A-98/57549
- WO-A-02/063969
- DE-A1- 19 524 211
- DE-A1-102004 039 733
- US-A- 5 935 632
- US-A1- 2002 012 732

## Beschreibung

Die Erfindung betrifft ein Inbetriebnahmeverfahren einer Milchentkeimungsanlage mit den Verfahrensschritten Durchspülen der Milchentkeimungsanlage mit Spülwasser, wobei ein Separator und eine darauf folgende Pasteurisiereinheit mit einem Flüssigkeitsstrom durchflossen werden und darauf folgendes Einleiten von Milch in die Milchentkeimungsanlage vor dem Separator zum Ersetzen des Spülwassers sowie eine Milchentkeimungsanlage zur Durchführung des Verfahrens. Die Milch wird weiter in eine Mikrofiltrationseinheit an einem Abzweigungsventil zwischen dem Separator und der Pasteurisiereinheit abgeleitet und darauf folgend wird mikrofiltrierte Milch aus der Mikrofiltrationseinheit in die Milchentkeimungsanlage an einer Milchzuführung nach dem Abzweigungsventil und vor der Pasteurisiereinheit eingeleitet. Derartige Milchentkeimungsanlagen werden in der milchverarbeitenden Industrie eingesetzt, um Rohmilch in verschiedene Milchprodukte zu veredeln oder diese haltbar zu machen.

Üblicherweise wird die Milch als Rohmilch bei einer Lagertemperatur von ca. 4°C der Milchentkeimungsanlage zugeführt. In der Entkeimungsanlage wird die Milch zunächst auf eine Prozesstemperatur von ca. 55°C erwärmt. Diese Prozesstemperatur eignet sich besonders günstig zum Trennen des Milchstroms, also der die Milchentkeimungsanlage durchfließenden Milch, in einen Magermilchteilstrom und einen Rahmteilstrom im Separator, d.h. hier liegt die optimale sogenannte "Trenngrenze". Der Magermilchteilstrom hat üblicherweise einen Fettgehalt von 0,03% und der Rahmteilstrom hat einen Fettgehalt von ca. 35%, wogegen die Rohmilch im Falle von Kuhmilch ca. 4,2% Fettgehalt aufweist. Optional kann der Magermilchteilstrom in einer Bactofuge zentrifugiert werden, wodurch die Keimzahl im Magermilchteilstrom, bzw. in der darin enthaltenen Magermilch, durch Zentrifugieren reduziert wird. In der Standardisierungseinheit wird dann der Magermilchteilstrom wieder mit Teilen des Rahmteilstroms zu einem im Fettgehalt eingestellten, bzw. standardisierten Milchstrom (Fettmilchstrom) zusammengeführt, wodurch Milchprodukte unterschiedlichen Fettgehalts herstellbar sind. Je nach gewünschtem Fettgehalt wird ein unterschiedlich großer Teil des Rahmstroms wieder zugeführt. Üblicherweise wird bei Entkeimungsanlagen der Fettmilchstrom nach Durchlaufen einer Homogenisierungseinheit einer Pasteurisiereinheit oder einer Ultrahocherhitzungseinheit zur Ultrahocherhitzung des Fettmilchstroms zugeführt, in denen die Keimzahl des Fettmilchstroms reduziert wird. Eine Ultrahocherhitzung scheidet jedoch bei vielen Milchprodukten aus, da durch die dabei angewandten hohen Temperaturen eine Geschmacksbeeinträchtigung der Milch oder eine Denaturierung von Milchinhaltsstoffen erfolgt. In der Pasteurisiereinheit wird der Fettmilchstrom über Wärmetauscher (Heizmittel) auf eine Temperatur von 72°C bis maximal 74°C für eine Erhitzungszeit von ca. 35 Sekunden erwärmt. Daraufhin wird der Fettmilchstrom wieder auf die Lagertemperatur abgekühlt. Der in der Pasteurisiereinheit vorgenommene Pasteurisierungsprozess ist dabei in der Europäischen Gemeinschaft genau vorgeschrieben. Insbesondere sind dabei die Vorschriften der sogenannten "Kieler Richtlinien" einzuhalten. Bei üblichen Entkeimungsanlagen, bei denen ein Pasteurisierungsprozess durchgeführt wird, wird die Keimzahl von ca. 70 000 bis 300 000 Keimen pro Milliliter (K/ml) auf ca. 100-1000 K/ml reduziert. Diese Keimzahl bestimmt die Haltbarkeitszeit der hergestellten Milchprodukte. Im Falle von Trinkmilch beträgt diese Haltbarkeitszeit üblicherweise 10 bis 14 Tage, je nach dem, ob der Magermilchstrom in der Bactofuge zentrifugiert wurde oder nicht, nachdem die Milch die Entkeimungsanlage verlassen hat, d.h. abgefüllt wurde.
Nachteilig bei den derartigen Entkeimungsverfahren ist es, dass die Keimzahl nur unter Inkaufnahme einer Geschmacksbeeinträchtigung der Milch reduziert und damit die Haltbarkeitszeit nicht ausgeweitet werden kann. Die Geschmacksbeeinträchtigung der Milch tritt dabei bei einer Erwärmung der Milch auf über 74°C auf. Ursächlich hierfür ist eine thermische Umwandlung von Milcheiweiß- und/oder Milchzucker-Bestandteilen, wodurch die Milch einen typischen süßlichen Geschmack aufweist. Der Nachweis der Geschmacksbeeinträchtigung kann über Peroxidase und/oder Phosphatase geführt werden (Phosphatasenachweis und/oder Peroxidasenachweis). Die Milch gilt dabei als Frischmilch, wenn der Phosphatasenachweis negativ ist und der Peroxidasenachweis positiv ist.

Die Keimzahl im fertigen Milchprodukt kann jedoch ohne Geschmacksbeeinträchtigung weiter reduziert werden, wenn der Magermilchteilstrom in einer Mikrofiltrationsanlage filtriert wird. Um die Vorschriften der "Kieler Richtlinie" einzuhalten, muss die Milch, bzw. das Milchprodukt, dabei weiterhin eine Pasteurisiereinheit durchlaufen. Die Milch, d.h. der Magermilchteilstrom, durchläuft nach dem Zuführen in den Separator eine Mikrofiltrationseinheit. Während einer großtechnischen Milchentkeimung muss der Milchstrom aus regelungstechnischen und rechtlichen Gründen auf einem konstanten Wert gehalten werden. Dies ist insbesondere deshalb erforderlich, weil sich beim Durchströmen der Pasteurisiereinheit ein thermisches Gleichgewicht zwischen dem Milchstrom und den Heizmitteln der Pasteurisiereinheit einstellt.

D.h. das Aufheizen des Milchstroms in der Pasteurisiereinheit wird exakt so eingestellt, dass die Heizleistung der Heizmittel zu einer den gesetzlichen Vorschriften der "Kieler Richtlinie" entsprechenden Temperatur der Milch führt. Ändert sich die Strömungsgeschwindigkeit, so führt dies zumindest zu nicht zu tolerierenden Abweichungen der Temperatur der Milch, was dazu führt, dass die Anlage ausfahren muss und Teile der Milch als Produktionsausschuss verwertet werden müssen. Im Extremfall kann auch eine Beschädigung der Pasteurisiereinheit resultieren. Bevor mindestens Teile des Magermilchteilstroms und mindestens Teile des Rahmteilstroms in einer Standardisierungseinheit zu einem Fettmilchstrom vermischt werden, durchläuft der Magermilchteilstrom zu dessen Filtration die Mikrofiltrationseinheit mindestens einmal und der Rahmteilstrom durchläuft einen Rahmerhitzer, wobei der Rahmteilstrom im Rahmerhitzer für eine Erhitzungszeit auf eine Entkeimungstemperatur erhitzt wird. Der Rahm kann dabei wesentlich stärker erhitzt werden als der Fettmilchstrom in einer Pasteurisiereinheit. Wird die Mikrofiltrationseinheit vom Magermilchteilstrom zweimal durchlaufen, so wird die Keimzahl im Magermilchteilstrom weiter auf ca. 10 K/ml reduziert. Generell gilt, dass die Keimzahl pro Durchlauf um ca. vier Zehnerpotenzen reduziert wird. Die Reduzierung der Keimzahl hängt dabei von der Art der in der Mikrofiltrationseinheit vorhandenen und verwendeten Filter ab. Die angegebenen Werte beziehen sich auf üblicherweise bei der Mikrofiltration von Milch verwendete Filter bzw. entsprechende Porengrößen dieser Filter. Die Mikrofiltrationseinheit weist üblicherweise zur Filtration des Magermilchteilstroms sogenannte "Coss-Flow-Filter" auf. Bei diesen Filtern wird das Ansammeln eines Filterkuchens durch eine ständig herrschende Querströmung des Magermilchteilstroms vor dem Filter verhindert. Ein Aufbau eines Filterkuchens würde zur Verstopfung des Filters führen, was zu einer Standzeit der Entkeimungsanlage von zehn bis zwölf Stunden führen würde. In der Mikrofiltrationseinheit muss, um ein Verstopfen der Filter (Kolmatieren) zu verhindern, ständig eine hohe Strömungsgeschwindigkeit herrschen. Diese Strömungsgeschwindigkeit hängt von der Art der gewählten Filter ab. Z.B. kann bei einer Milchentkeimungsanlage, die einen Milchstrom in der Größenordnung von 30000 Liter pro Stunde verarbeitet, eine Anordnung von drei Filterkerzen gewählt werden, wobei eine Umwälzung der Milch von 900 000 Liter pro Stunde notwendig sein kann. Die Strömungsgeschwindigkeit der Milch in der Mikrofiltrationseinheit beträgt also das 30-fache der Strömungsgeschwindigkeit durch die restliche Milchentkeimungsanlage, insbesondere die Pasteurisiereinheit.
Im Falle von Frischmilch kann durch die kombinierte Mikrofiltration mit der Rahmerhitzung die Haltbarkeitszeit um mindestens 6 Tage gegenüber lediglich pasteurisierter Milch verlängert werden. Die Haltbarkeitszeit beträgt dann ca. 20 Tage, mindestens 18 Tage.

Vor, bzw. bei, Inbetriebnahme einer Milchentkeimungsanlage muss diese mittels Durchspülen mit Wasser gereinigt werden. Dazu wird die gesamte Anlage, bzw. die zu reinigenden Teile der Anlage, mit einem Spülwasserstrom durchspült. Der Spülwasserstrom wird dabei bereits auf eine Strömungsgeschwindigkeit eingestellt, bei der die Anlage gemäß "Kieler Richtlinie" produzieren kann. Insbesondere wird bereits das beschriebene thermische Gleichgewicht in der Pasteurisiereinheit eingestellt. Dabei ergibt sich das Problem, dass die Strömungsgeschwindigkeit der Milch bzw. des zur Reinigung verwendeten Wassers in der Mikrofiltrationseinheit, z.B. 900 m³/h, wesentlich größer ist, als in der restlichen Anlage, insbesondere in der Pasteurisiereinheit, wo diese z.B. 30 m³/h beträgt. Weiter kann die Pasteurisiereinheit nicht ohne Durchströmung mit Milch oder Wasser betrieben werden. Wird also bei der Inbetriebnahme die Anlage zunächst mit Wasser betrieben und soll dann auf den Betrieb mit Milch umgestellt werden, so besteht das Problem, dass innerhalb der Mikrofiltrationseinheit, bei einfachem Übergang von Wasser zu Milch, eine starke Durchmischung stattfinden würde, die zu einem hohen Ausschuss führen würde. Würde die Mikrofiltrationsanlage zunächst vom Spülwasser entleert werden, so ergäbe sich ein Abbrechen der Flüssigkeitsströmung durch die Pasteurisierungsanlage, was zu einer Beschädigung der Pasteurisierungsanlage führen könnte. Bei einer Inbetriebnahme einer Milchentkeimungsanlage mit einer Mikrofiltrationseinheit kann daher die Pasteurisiereinheit nicht vorjustiert werden. Dies führt bei der Inbetriebnahme zu einem hohen Durchlauf von Milch, die nicht der "Kieler Richtlinie" entspricht.

Milchentkeimungsverfahren und Milchentkeimungsanlagen sind in den Druckschriften DE 195 24 211 A1, WO 02/063969 A, US 2002/012732 A1, WO 98/57549 A, WO 94/26121 A und US 5 935 632 A beschrieben.
Bei der WO 02/063969 A wird ein Mikrofiltrationsverfahren zur Entkeimung der Milch eingesetzt. Dazu wird die von der zu entkeimende Milch ein Rahmanteil separiert und nach dessen Pasteurisierung der Milch wieder zugeführt.

Der Erfindung liegt die Aufgabe zugrunde, ein Inbetriebnahmeverfahren einer Milchentkeimungsanlage und eine Milchentkeimungsanlage bereitzustellen, welche die Nachteile des Standes der Technik vermeiden und insbesondere bei denen ein möglichst geringer Anteil der eingeleiteten Milch als Ausschuss, z.B. durch Vermischen mit Wasser, anfällt, d.h. bei denen ein möglichst großer Anteil der eingeleiteten Milch nach dem Durchlaufen der Milchentkeimungsanlage innerhalb für Frischmilch einzuhaltender Toleranzbereiche der "Kieler Richtlinie" liegt.

Diese Aufgabe wird durch das Inbetriebnahmeverfahren einer Milchentkeimungsanlage und die Milchentkeimungsanlage der unabhängigen Ansprüche gelöst. Die abhängigen Ansprüche stellen bevorzugte Ausführungsformen der Erfindung dar.

Bei dem erfindungsgemäßen Inbetriebnahmeverfahren einer Milchentkeimungsanlage wird zunächst die Milchentkeimungsanlage mit Spülwasser durchspült, wobei ein Separator und eine darauf folgende Pasteurisiereinheit mit einem Flüssigkeitsstrom durchflossen werden. Darauf folgend wird Milch in die Milchentkeimungsanlage vor dem Separator zum Ersetzen des Spülwassers eingeleitet. Dieses Spülwasser wird beim Anfahren des Erhitzers so angewärmt, dass man mit Hilfe dieses zirkulierenden Heisswassers die Anlage sterilisiert. Anschließend wird die Anlage mit dem Heisswasser im Umlauf gefahren und die Temperaturen im Erhitzer auf die Betriebstemperaturen eingefahren. Die Mikrofiltrationsanlage wird separat nach dem gleichen Verfahren angefahren und in einen betriebsbereiten Zustand gebracht. Bevorzugt wird nach dem Ende der Sterilisation der Mikrofiltratiönsanlage in einem speziellen Wasserbehälter das sterile Heißwasser auf Produkttemperatur abgekühlt bereitgehalten um später Ersatzflüssigkeit für eine kontinuierliche Durchströmung des Pasteurisiereinheit (Milchpasteur) zu sorgen. Die Milch wird dann in eine Mikrofiltrationseinheit an einem Abzweigungsventil zwischen dem Separator und der Pasteurisiereinheit abgeleitet, woraufhin mikrofiltrierte Milch aus der Mikrofiltrationseinheit in die Milchentkeimungsanlage an einer Milchzuführung, mittels mindestens eines Permeatventils, nach dem Abzweigungsventil und vor der Pasteurisiereinheit eingeleitet wird. Erfindungsgemäß wird gleichzeitig mit dem Ableiten ein Zuleiten einer Ersatzflüssigkeit, dem auf 52°C temperierten Heisswasser, in die Milchentkeimungsanlage zwischen dem Abzweigungsventil und der Pasteurisiereinheit mittels eines Ersatzflüssigkeitszuleitungsventils vorgenommen, derart, dass der Flüssigkeitsstrom durch die Pasteurisiereinheit sowie das thermische Gleichgewicht aufrecht erhalten werden, wobei das Zuleiten der Ersatzflüssigkeit mit dem Einleiten der mikrofiltrierten Milch in die Milchentkeimungsanlage an der Milchzuführung beendet wird, d.h. das Ersatzflüssigkeitszuleitungsventil wird, wenn die Mikrofiltrationseinheit mit Milch befüllt ist, abgeriegelt (geschlossen) und die mikrofiltrierte Milch wird an Stelle des zusätzlichen Wassers in die Restanlage eingeleitet.

Wenn die Milch eine Überleitung zur Mikrofiltration erreicht hat, wird die Milch also in die, bevorzugt leere, Mikrofiltrationseinheit eingeleitet und es wird, um die Durchströmung in der darauf folgenden Pasteurisiereinheit aufrecht zu erhalten, aus einem separaten Zulauf nach dem Übergang der Mikrofiltrationseinheit in die Restanlage zusätzlich Wasser in die Restanlage eingespeist, wodurch ein Abbrechen der Flüssigkeitsströmung durch die Pasteurisiereinheit verhindert wird. Wenn die Mikrofiltrationseinheit mit Milch befüllt ist, wird dieser Zulauf abgeriegelt und die mikrofiltrierte Milch an Stelle des zusätzlichen Wassers in die Restanlage eingeleitet. Dadurch ist es möglich, die gesamte Milchentkeimungsanlage zunächst mit Spülwasser zu betreiben, d.h. insbesondere die Pasteurisiereinheit derart hochzufahren, dass das für das Einhalten der "Kieler Richtlinie" notwendige thermische Gleichgewicht besteht. Es kann also unmittelbar vom Durchspülen mit Wasser zu einer regulären Produktion übergegangen werden, wobei sich der Produktionsausschuss auf eine Mischphase von Wasser und Milch, insbesondere auf der Permeatseite der Mikrofiltrationseinheit, also der Seite in Strömungsrichtung der zu filternden Milch nach dem bzw. den Filtern der Mikrofiltrationseinheit, mit einem geringen Volumen beschränkt. Bevorzugt wird beim Anfahren der Permeatseite nicht zirkuliert, so dass die Vermischung dort, wie in einer Rohrleitung, äusserst gering ist.

Mit dem erfindungsgemäßen Verfahren kann die vorgenannte Vermischung von Milch und Wasser beim Anfahren sehr gering gehalten werden, da die Retentatseite der Mikrofiltrationsanlage, also der Bereich der Mikrofiltrationsanlage in Strömungsrichtung vor deren Filter bzw. Filtern, beim Anfahren entleert werden kann, so dass die Milchentkeimungsanlage in einer kontinuierlichen Weise angefahren werden kann, derart dass geforderte Regelparameter eingehalten werden. Dazu notwendige zusätzliche Maßnahmen beim Anfahren sind der Gegenstand des erfindungsgemäßen Verfahrens.

Besonders bevorzugt wird die Mikrofiltrationseinheit durchspülendes Wasser vor dem Ableiten der Milch in die Mikrofiltrationseinheit aus der Mikrofiltrationseinheit, insbesondere vollständig, entleert. Wasser durchströmt dann nur noch die restliche Anlage. Dadurch wird das Entstehen einer großvolumigen Mischphase von Milch und Wasser bedingt durch eine große Strömungsgeschwindigkeit in der Mikrofiltrationsanlage verhindert.

Vorteilhaft wird das Ableiten der Milch in die Mikrofiltrationseinheit und das gleichzeitige Zuleiten der Ersatzflüssigkeit in die Milchentkeimungsanlage unmittelbar nach Ankunft der zum Ersetzen des Spülwassers eingeleiteten Milch an dem Abzweigungsventil vorgenommen. Dies verhindert, dass keine größere Menge von Milch die Mikrofiltrationseinheit nicht durchläuft.

Auf effiziente Weise kann die Ankunft der Milch mittels eines Trübungswächters detektiert werden.

Bevorzugt wird die Ersatzflüssigkeit aus einem Vorratstank zugeführt. Der Ersatztank kann dabei derart dimensioniert sein, dass immer eine ausreichende Menge von Ersatzflüssigkeit ausreichend schnell zur Verfügung steht, um den Flüssigkeitsstrom möglichst konstant aufrecht zu erhalten. Der Tankinhalt muss dabei mindestens dem Volumen der Mikrofiltrationseinheit von einigen hundert Litern, z.B. 600 bis 700 Litern, entsprechen. In dem Vorratstank kann insbesondere nach dem Ende der Sterilisation der Mikrofiltrationsanlage das zum Durchspülen der Mikrofiltrationsanlage verwendete sterile Heißwasser, bevorzugt auf Produkttemperatur abgekühlt, bereitgehalten werden, um später als Ersatzflüssigkeit für eine kontinuierliche Durchströmung der Pasteurisiereinheit zu sorgen. Eine zusätzliche Sterilisation der Ersatzflüssigkeit kann dadurch entfallen. Das Spülwasser wird dabei entsprechend eines Filterretentats beim regulären Betrieb der Mikrofiltrationsanlage abgeleitet.

Das Einleiten der mikrofiltrierten Milch in die Milchentkeimungsanlage an der Milchzuführung wird vorteilhaft vorgenommen, nachdem die Mikrofiltrationseinheit vollständig mit Milch befüllt ist, d.h. nachdem keine Gase, insbesondere Luft, mehr in der Mikrofiltrationseinheit, d.h. in dem Volumen der Mikrofiltrationseinheit das im regulären Betrieb mit Milch durchströmt wird, vorhanden sind. Dadurch wird die Filteroberfläche der Filter der Mikrofiltrationseinheit optimal ausgenutzt. Restgase würden die Filter teilweise verstopfen.

Das Permeatventil wird bevorzugt mit Ventilöffnungszeiten von einigen Minuten geöffnet. Entsprechend wird dabei das Ersatzflüssigkeitszuleitungsventil geschlossen. Dies führt zu einem langsamen Benetzen der Filteroberflächen der Filter der Mikrofiltrationseinheit mit einer Grenzschicht, wodurch eine Filterkerzenbelastung reduziert wird. Insbesondere werden Komplikationen durch ein Verstopfen der Filterkerzen vermieden.
Das Schließen des Ersatzflüssigkeitszuleitungsventils erfolgt dabei derart, dass das Öffnen des Permeatventils hinsichtlich des Aufrechterhaltens der Durchströmung, insbesondere der Pasteurisierungseinheit, gerade ausgeglichen wird.

Durch das langsame Öffnen der Ventile und/oder durch das Abwarten eines cross-flow Filtrationsgleichgewichts wird ein größeres Volumen an Ersatzflüssigkeit benötigt. Der Tankinhalt kann entsprechend angepasst werden.

Eine erfindungsgemäße Milchentkeimungsanlage ist eingerichtet zur Durchführung des erfindungsgemäßen Inbetriebnahmeverfahrens. Die erfindungsgemäße Milchentkeimungsanlage weist einen Separator und eine darauf folgende Pasteurisiereinheit auf. Ein Abzweigungsventil zwischen dem Separator und der Pasteurisiereinheit ist eingerichtet, nach einem Durchspülen des Separators und der Pasteurisiereinheit mit einem Flüssigkeitsstrom aus Spülwasser, zum Ersetzen des Spülwassers in die Milchentkeimungsanlage vor dem Separator eingeleitete Milch in eine, bevorzugt entleerte, Mikrofiltrationseinheit abzuleiten. Eine nach dem Abzweigungsventil und vor der Pasteurisiereinheit angeordnete Milchzuführung ist eingerichtet, mikrofiltrierte Milch aus der Mikrofiltrationseinheit in die Milchentkeimungsanlage einzuleiten. Dies erfolgt durch Öffnen mindestens eines Permeatventils. Erfindungsgemäß sind ein Ersatzflüssigkeitszuleitungsventil und ein Steuerungsmodul vorgesehen, wobei das Steuerungsmodul eingerichtet ist, das Abzweigungsventil und das Ersatzflüssigkeitszuleitungsventil derart zu steuern, dass gleichzeitig mit dem Ableiten der Milch in die Mikrofiltrationseinheit ein Zuleiten einer Ersatzflüssigkeit, bevorzugt Wasser, zwischen dem Abzweigungsventil und der Pasteurisiereinheit in die Milchentkeimungsanlage mittels des Ersatzflüssigkeitszuleitungsventils vornehmbar ist, derart, dass der Flüssigkeitsstrom durch die Pasteurisiereinheit aufrechterhaltbar ist, wobei das Zuleiten der Ersatzflüssigkeit mit dem Einleiten der mikrofiltrierten Milch in die Milchentkeimungsanlage an der Milchzuführung durch Schließen des Ersatzflüssigkeitszuleitungsventils beendbar ist.

Die erfindungsgemäße Milchentkeimungsanlage ermöglicht das Durchführen des erfindungsgemäßen Verfahrens und stellt damit die Vorteile des erfindungsgemäßen Verfahrens zur Verfügung.

Das Steuermodul ist bevorzugt eingerichtet, das Ableiten der Milch in die Mikrofiltrationseinheit und das gleichzeitige Zuleiten der Ersatzflüssigkeit in die Milchentkeimungsanlage unmittelbar nach Ankunft der zum Ersetzen des Spülwassers eingeleiteten Milch an dem Abzweigungsventil vorzunehmen. Bevorzugt ist ein Trübungswächter vorgesehen, eingerichtet, die Ankunft der Milch zu detektieren.

Vorteilhaft ist ein Vorratstank vorgesehen, wobei die Ersatzflüssigkeit aus einem Vorratstank zuführbar ist und/oder die Mikrofiltrationseinheit umfasst mindestens eine, bevorzugt zwei, cross-flow Filtrationseinheiten.
Bevorzugt ist eine Spülwasserleitung vorgesehen, eingerichtet Spülwasser von der Mikrofiltrationseinheit in den Vorratstank abzuleiten.

In einer weiteren besonders bevorzugten Ausführungsform umfasst die Milchentkeimungsanlage einen Rahmerhitzer, wobei eine Retentatleitung vorgesehen ist, eingerichtet, ein Filterretentat der Mikrofiltrationseinheit in den Rahmerhitzer abzuleiten Der Rahmerhitzer ist dabei eingerichtet, das Filterretentat zusammen mit Rahm zu erhitzen. Diese Anordnung kann auch bei jeder Milchentkeimungsanlage mit einer Mikrofiltrationseinheit gemäß Stand der Technik verwendet werden. Es muss nicht zwingend die erfindungsgemäße Einrichtung zur Durchführung des erfindungsgemäßen Verfahrens verwirklicht sein. Das Filterretentat einer Mikrofiltrationseinheit ist nicht nur keimkonzentriert, sondern weist auch einen erhöhten Fettgehalt auf. Durch Zuführung des Filterretentats in den Rahmerhitzer kann das Retentat weiter im Produktionskreislauf verbleiben und fällt nicht als Produktionsausschuss an. Der Rahmerhitzer kann dabei mit wesentlich höheren Erhitzungstemperaturen betrieben werden als eine Pasteurisiereinheit. Es ist eine Erhitzung des Rahms auf ca. bis zu 128°C, bevorzugt 125°C, für mehrere Sekunden möglich. Dabei wird die Keimzahl des erhitzten Rahms und des Filterretentats auf weniger als 10 Keime pro Milliliter am Austritt des Rahmerhitzers reduziert. Eine Integration in eine amtlich zugelassene Erhitzungslinie gemäß "Kieler Richtlinie" bleibt dabei erhalten. Weiter bleibt der Phosphatasenachweis negativ und der Peroxidasenachweis bleibt positiv, so dass ein mit einer derart ausgeführten Milchentkeimungsanlage hergestelltes Produkt als Frischmilch gelten kann.

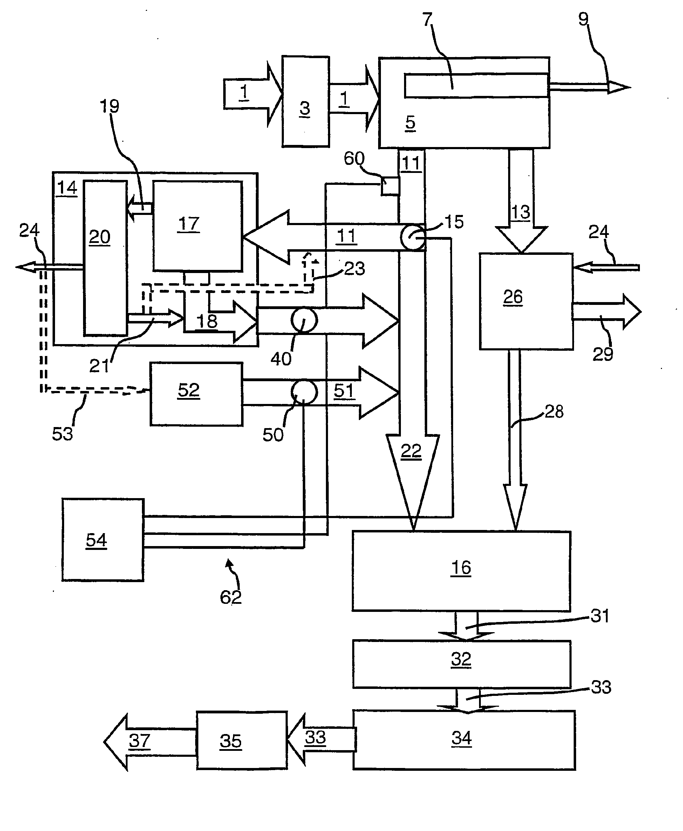

Die Erfindung wird nachfolgend anhand eines Ausführungsbeispiels unter Bezugnahme auf die Zeichnung näher erläutert.

Die Figur der Zeichnung zeigt den erfindungsgemäßen Gegenstand stark schematisiert und ist nicht maßstäblich zu verstehen. Die einzelnen Bestandteile des erfindungsgemäßen Gegenstandes sind so dargestellt, dass ihr Aufbau gut gezeigt werden kann.

Die Figur zeigt eine erfindungsgemäße Milchentkeimungsanlage, eingerichtet zur Durchführung des erfindungsgemäßen Verfahrens, wobei nachfolgend zunächst der Regelbetrieb einer derartigen Milchentkeimungsanlage, also der Betrieb der Milchentkeimungsanlage nach der Durchführung des erfindungsgemäßen Inbetriebnahmeverfahrens, beschrieben wird. Zunächst wird die der Entkeimungsanlage zugeführte Rohmilch, aus der ein die Entkeimungsanlage durchfließender Milchstrom 1 gebildet ist, in einem Anwärmer 3 von der Lagertemperatur auf die Prozesstemperatur von ca. 55°C gebracht. Der Milchstrom 1 wird dann einem Separator 5 zugeführt. Unter Zuführen wird verstanden, dass der jeweilige Strom durch ein z.B. Edelstahlrohr in eine nachfolgende Einheit, z.B. den Separator 5 einfließt. Derartige Rohrverbindungen sind in der Figur als Blockpfeile dargestellt, wobei die Pfeilrichtung der Blockpfeile Fließrichtungen der in den Rohrverbindungen fließenden Ströme, also z.B. des Magermilchstroms, repräsentieren. Der Separator 5 umfasst eine Entschlammungseinheit 7, mittels der grobe Verunreinigungen aus dem Milchstrom entfernt werden, diese Verunreinigungen werden als Retentat 9 aus dem Separator 5 abgeleitet. Im Separator 5 wird der Milchstrom weiter in einen Magermilchteilstrom 11 und einen Rahmteilstrom 13 getrennt. Der Magermilchteilstrom 11 wird daraufhin einer Mikrofiltrationseinheit 14 zugeführt. Dies erfolgt über ein Abzweigungsventil 15, mittels dessen der Magermilchstrom 11 aus einer den Seperator 5 und eine Standardisierungseinheit 16 verbindenden Rohrleitung abgezweigt wird. Zur Vermeidung der Zuführung von Keimbelasteter Milch in die Restanlage ist das Abzweigungsventil 15 bevorzugt entweder als Umschaltventil ausgebildet oder es ist ein zusätzliches Absperrventil direkt nach dem Abzweigungsventil 15, zum Absperren des Magermilchstroms 11 gegen die Standardisierungseinheit 16, angeordnet.
Bei der Mikrofiltrationseinheit 14 handelt es sich z.B. um eine Cross-Flow-Filtrationsanlage. Der Magermilchteilstrom 11 wird in der Mikrofiltrationseinheit 14 in einer ersten Filtrationseinheit 17 in einen ersten entkeimten Magermilchteilstrom 18 und einen keimkonzentrierten Magermilchteilstrom 19 aufgeteilt und in einer zweiten Filtrationseinheit 20 wird der keimkonzentrierte Magermilchteilstrom 19 zu einem zweiten entkeimten Magermilchteilstrom 21 filtriert. Danach werden die entkeimten Magermilchteilströme 18,21 als Teile des gefilterten Magermilchteilstroms 22 einer Standardisierungseinheit 16 zugeführt. Der zweite entkeimte Magermilchteilstrom 21 kann, wie durch einen gestrichelten Pfeil 23 dargestellt, alternativ auch wieder dem Magermilchteilstrom 11 vor der Mikrofiltrationseinheit 14 zugeführt werden. Dies führt zu einer weiteren Erhöhung des Entkeimungsgrades des Magermilchteilstroms 11,22 und damit zu einer Erhöhung des Entkeimungsgrades eines unter Anwendung des erfindungsgemäßen Verfahrens hergestellten Milchprodukts. Ein keimkonzentriertes Retentat 24 wird aus der zweiten Filtrationseinheit 20 abgeleitet. Mit diesem zweigestuften Filtrationsprozess kann das Retentat, also der keimkonzentrierte Ausschuß, minimiert werden. Die Menge des Retentats liegt dann bei unter einem Prozent der zugeführten Milchmenge.
Der Rahmteilstrom 13 wird einem Rahmerhitzer 26 zugeführt, wo der Rahmteilstrom 13 für eine Erhitzungszeit auf eine Entkeimungstemperatur erhitzt wird. Das Retentat 24 wird über eine Retentatleitung dem Rahmerhitzer 26 zugeführt, wo es zusammen mit dem Rahm des Rahmteilstroms 13 erhitzt wird.
Der Rahmerhitzer 26 kann z.B. Wärmetauscherplatten umfassen, mittels denen Wärmeenergie auf den Rahm des Rahmteilstroms 13 übertragen wird. Der Rahmteilstrom 13 wird nach dem Erhitzen weiter aufgeteilt. Ein erster Teil 28 des Rahmteilstroms 13 wird der Standardisierungseinheit 16 zugeführt und ein zweiter Teil 29 (Überschussrahm) wird der Entkeimungsanlage entnommen. Es kann auch lediglich der erste Teil 28 des Rahmteilstroms 13 dem Rahmerhitzer 26 zugeführt werden und damit wärmebehandelt werden. Die mengenmäßige Aufteilung des Rahmteilstroms 13 in einen ersten und einen zweiten Teil erfolgt je nach gewünschtem Fettgehalt des in der Standardisierungseinheit 16 aus dem ersten Teil 28 des Rahmteilstroms 13 und dem gefilterten Magermilchteilstrom 22 zusammengemischten Fettmilchstroms 31. Der die Standardisierungseinheit 16 verlassende Fettmilchstrom 31 wird nachfolgend in einer Homogenisierungseinheit 32 homogenisiert, wodurch ein Aufrahmen der Fettmilch des homogenisierten Fettmilchstroms 33 verhindert wird. Alternativ kann eine Teilstromhomogenisierung erfolgen, wobei der gefilterte Magermilchteilstrom 21 bereits vor der Standardisierungseinheit 16 mit dem ersten Teil 28 des Rahmstroms einer Homogenisierungseinheit zugeführt wird. Der homogenisierte Fettmilchstrom 33 durchläuft daraufhin eine Pasteurisiereinheit 34, bevor der homogenisierte Fettmilchstrom 33 in einem Kühler 35 wieder auf Lagertemperatur abgekühlt wird, um anschließend die erfindungsgemäße Entkeimungsanlage z.B. zu einer Milchabfüllanlage als gekühlter Fettmilchstrom 37 zu verlassen.

Bei einer Inbetriebnahme einer derartigen Miichentkeimungsanlage wird zunächst die Milchentkeimungsanlage mit Spülwasser durchspült um die Milchentkeimungsanlage zu reinigen. Es wird also zunächst anstelle des Milchstroms 1 Spülwasser eingeleitet, wobei in den zu reinigenden Teilen der Milchentkeimungsanlage, die im Standardbetrieb mit Milch durchströmt werden, insbesondere der Separator 5 und der Pasteurisiereinheit 34, ein Flüssigkeitsstrom aus Spülwasser aufrecht erhalten wird. Nach ausreichender Reinigung wird Milch in die Milchentkeimungsanlage vor dem Separator 5 zum Ersetzen des Spülwassers eingeleitet. Wenn die Milch, d.h. der Magermilchstrom 11, das Abzweigungsventil zwischen dem Separator 5 und der Pasteurisiereinheit 34 erreicht hat, wird die Milch mittels des Abzweigungsventils 15 in die Mikrofiltrationseinheit 14 abgeleitet. Wenn auch die Mikrofiltrationseinheit 14 zu deren Reinigung mit dem Flüssigkeitsstrom durchspült wurde, muss diese vor dem Ableiten der Milch vom Spülwasser entleert werden. Dazu wird das Abzweigungsventil derart eingestellt, dass der Spülwasserstrom direkt vom Separator 5 in die darauf folgende Stufe der Milchentkeimungsanlage, z.B. die Standardiesierungseinheit 16 oder gleich in die Pasteurisiereinheit 34 geleitet wird, ohne die Mikrofiltrationseinheit 14 zu durchströmen. Wenn die Mikrofiltrationseinheit 14 vollständig mit Milch aus dem Magermilchstrom 11 befüllt ist, wird mikrofiltrierte Milch als gefilterter Magermilchteilstrom 22 aus der Mikrofiltrationseinheit 14 in die Milchentkeimungsanlage an einer Milchzuführung nach dem Abzweigungsventil 15 und vor der Pasteurisiereinheit 34 zugeführt. Letzteres wird durch Öffnen eines Permeatventils 40 erreicht. Dieser gefilterte Magermilchteilstrom 22 verdrängt dann das sich in den restlichen zu reinigenden Teilen der Milchentkeimungsanlage, insbesondere der Pasteurisiereinheit 34, befindliche Spülwasser. Das Abzweigungsventil 15 ist also eingerichtet, nach einem Durchspülen des Separators 5 und der Pasteurisiereinheit 34 mit dem Flüssigkeitsstrom aus Spülwasser, zum Ersetzen des Spülwassers in die Milchentkeimungsanlage vor dem Separator 5 eingeleitete Milch in die, bevorzugt entleerte, Mikrofiltrationseinheit 14 abzuleiten. Da durch das Ableiten des Magermilchstroms 11 in die Mikrofiltrationseinheit 14 der Flüssigkeitsstrom in den folgenden Teilen der Milchentkeimungsanlage, insbesondere der Pasteurisiereinheit 34, unterbrochen würde, wird mittels eines Ersatzflüssigkeitszuleitungsventils 50 eine Ersatzflüssigkeit, bevorzugt sterilisiertes Wasser, an einer Zuleitung 51 zwischen dem Abzweigungsventil 15 und der Pasteurisiereinheit 34 in die Milchentkeimungsanlage eingeleitet. Dabei wird möglichst exakt so viel Ersatzflüssigkeit zugeführt, dass der Flüssigkeitsstrom durch die Pasteurisiereinheit 34 derart aufrechterhalten wird, dass ein dort herrschendes thermisches Gleichgewicht zwischen Heizmittel der Pasteurisiereinheit und der die Pasteurisiereinheit durchströmenden Flüssigkeit erhalten bleibt. Die Ersatzflüssigkeit wird in einem Tank 52 bereitgehalten, um immer eine ausreichende Flüssigkeitsmenge zur Verfügung zu halten. Über die Spülwasserleitung 53 kann der Tank mit Spülwasser aus der Mikröfiltrationseinheit 14 befüllt werden. Es ist ein Steuerungsmodul 54 vorgesehen, wobei das Steuerungsmodul eingerichtet ist, das Abzweigungsventil 15 und das Ersatzflüssigkeitszuleitungsventil 50 derart zu steuern, dass gleichzeitig mit dem Ableiten der Milch in die Mikrofiltrationseinheit 14 ein Zuleiten der Ersatzflüssigkeit mittels des Ersatzflüssigkeitszuleitungsventils vorgenommen wird. Dabei wird insbesondere der Flüssigkeitsstrom durch die Pasteurisiereinheit 34 aufrechterhalten. Das Zuleiten der Ersatzflüssigkeit wird mit dem Einleiten der mikrofiltrierten Milch in die Milchentkeimungsanlage an der Milchzuführung, also wenn der filtrierte Magermilchteilstrom 22 an der Zuleitung 51 angekommen ist, beendet. Hier kann ein Trübungswächter vorgesehen sein, eingerichtet zur Detektion der ankommenden Milch. Bevorzugt wird das Ableiten der Milch in die Mikrofiltrationseinheit 14 und das gleichzeitige Zuleiten der Ersatzflüssigkeit in die Milchentkeimungsanlage unmittelbar nach Ankunft der zum Ersetzen des Spülwassers eingeleiteten Milch an dem Abzweigungsventil 15 vorgenommen. Dazu ist ein Trübungswächter 60, der eingerichtet ist, die Ankunft der Milch zu detektieren, kurz vor dem Abzweigungsventil 15 angeordnet. Der Trübungswächter, das Abzweigungsventil 15 und das Ersatzflüssigkeitszuleitungsventil 50 sind zu deren Steuerung, bzw. zur Übernahme von Messdaten mittels Leitungen 62 an das Steuerungsmodul 54 angeschlossen.

## Patentansprüche

1. Inbetriebnahmeverfahren einer Milchentkeimungsanlage mit den Verfahrensschritten
- Durchspülen der Milchentkeimungsanlage mit Spülwasser, wobei ein Separator (5) und eine darauf folgende Pasteurisiereinheit (34) mit einem Flüssigkeitsstrom durchflossen werden,
- darauf folgendes Einleiten von Milch (1) in die Milchentkeimungsanlage vor dem Separator (5) zum Ersetzen des Spülwassers,
- darauf folgendes Ableiten der Milch in eine Mikrofiltrationseinheit (14) an einem Abzweigungsventil (15) zwischen dem Separator (5) und der Pasteurisiereinheit (34), und
- darauf folgendes Einleiten von mikrofiltrierter Milch aus der Mikrofiltrationseinheit (14), durch Öffnen mindestens eines Permeatventils (40), in die Milchentkeimungsanlage an einer Milchzuführung (22) nach dem Abzweigungsventil (15) und vor der Pasteurisiereinheit (34),
**dadurch gekennzeichnet, dass**
gleichzeitig mit dem Ableiten ein Zuleiten einer Ersatzflüssigkeit, bevorzugt Wasser, in die Milchentkeimungsanlage zwischen dem Abzweigungsventil (15) und der Pasteurisiereinheit (34) mittels eines Ersatzflüssigkeitszuleitungsventils (50) vorgenommen wird, derart, dass der Flüssigkeitsstrom durch die Pasteurisiereinheit (34) aufrecht erhalten wird, wobei das Zuleiten der Ersatzflüssigkeit mit dem Einleiten der mikrofiltrierten Milch in die Milchentkeimungsanlage an der Milchzuführung (22) durch Schließen des Ersatzflüssigkeitszuleitungsventils (50) beendet wird.

2. Inbetriebnahmeverfahren nach Anspruch 1,
**dadurch gekennzeichnet, dass**
die Mikrofiltrationseinheit (14) durchspülendes Wasser vor dem Ableiten der Milch in die Mikrofiltrationseinheit (14) aus der Mikrofiltrationseinheit (14) entleert wird.

3. Inbetriebnahmeverfahren nach mindestens einem der Ansprüche 1 bis 2,
**dadurch gekennzeichnet, dass**
das Ableiten der Milch in die Mikrofiltrationseinheit (14) und das gleichzeitige Zuleiten der Ersatzflüssigkeit in die Milchentkeimungsanlage unmittelbar nach Ankunft der zum Ersetzen des Spülwassers eingeleiteten Milch an dem Abzweigungsventil (15) vorgenommen wird.

4. Inbetriebnahmeverfahren nach Anspruch 3,
**dadurch gekennzeichnet, dass**
die Ankunft mittels eines Trübungswächters (60) detektiert wird.

5. Inbetriebnahmeverfahren nach mindestens einem der Ansprüche 1 bis 4,
**dadurch gekennzeichnet, dass**
die Ersatzflüssigkeit aus einem Vorratstank (52) zugeführt wird.

6. Inbetriebnahmeverfahren nach mindestens einem der Ansprüche 1 bis 5,
**dadurch gekennzeichnet, dass**
das Einleiten der mikrofiltrierten Milch in die Milchentkeimungsanlage an
der Milchzuführung (22) vorgenommen wird nachdem die Mikrofiltrationseinheit (14) vollständig mit Milch befüllt ist.

7. Inbetriebnahmeverfahren nach mindestens einem der Ansprüche 1 bis 6,
**dadurch gekennzeichnet, dass**
das Öffnen des Permeatventils (40) und das Schließen des Ersatzflüssigkeitszuleitungsventils (50) mit Ventilöffnungs- und Schließzeiten von einigen Minuten vorgenommen wird.

8. Milchentkeimungsanlage, eingerichtet zur Durchführung des Inbetriebnahmeverfahren nach mindestens einem der Ansprüche 1 bis 7, mit
- einem Separator (5) und einer darauf folgenden Pasteurisiereinheit (34), und
- einem Abzweigungsventil (15) zwischen dem Separator (5) und der Pasteurisiereinheit (34), eingerichtet, nach einem Durchspülen des Separators (5) und der Pasteurisiereinheit (34) mit einem Flüssigkeitsstrom aus Spülwasser, zum Ersetzen des Spülwassers in die Milchentkeimungsanlage vor dem Separator (5) eingeleitete Milch (1) in eine, bevorzugt entleerte, Mikrofiltrationseinheit (14) abzuleiten und
- einer nach dem Abzweigungsventil (15) und vor der Pasteurisiereinheit (34) angeordneten Milchzuführung (22), eingerichtet durch Öffnen mindestens eines Permeatventils (40), mikrofiltrierte Milch aus der Mikrofiltrationseinheit (14) in die Milchentkeimungsanlage einzuleiten,
**dadurch gekennzeichnet, dass**
ein Ersatzflüssigkeitszuleitungsventil (50) und ein Steuerungsmodul (54) vorgesehen sind, wobei das Steuerungsmodul (54) eingerichtet ist, das Abzweigungsventil (15) und das Ersatzflüssigkeitszuleitungsventil (50) derart zu steuern, dass gleichzeitig mit dem Ableiten der Milch in die Mikrofiltrationseinheit (14) ein Zuleiten einer Ersatzflüssigkeit, bevorzugt Wasser, zwischen dem Abzweigungsventil (15) und der Pasteurisiereinheit (34) in die Milchentkeimungsanlage mittels des Ersatzflüssigkeitszuleitungsventils (50) vornehmbar ist, derart dass der Flüssigkeitsstrom durch die Pasteurisiereinheit (34) aufrechterhaltbar ist, wobei das Zuleiten der Ersatzflüssigkeit mit dem Einleiten der mikrofiltrierten Milch in die Milchentkeimungsanlage an der Milchzuführung (22) durch Schließen des Ersatzflüssigkeitszuleitungsventils (50) beendbar ist.

9. Milchentkeimungsanlage nach Anspruch 8,
**dadurch gekennzeichnet, dass**
das Steuermodul (54) eingerichtet ist, das Ableiten der Milch in die Mikrofiltrationseinheit (14) und das gleichzeitige Zuleiten der Ersatzflüssigkeit in die Milchentkeimungsanlage unmittelbar nach Ankunft der zum ersetzen des Spülwassers eingeleiteten Milch an dem Abzweigungsventil (15) vorzunehmen, bevorzugt wobei ein Trübungswächter (60) vorgesehen ist, eingerichtet, die Ankunft der Milch zu detektieren.

10. Milchentkeimungsanlage nach mindestens einem der Ansprüche 8 bis 9,
**dadurch gekennzeichnet, dass**
ein Vorratstank (52) vorgesehen ist, wobei die Ersatzflüssigkeit aus einem Vorratstank (52) zuführbar ist, bevorzugt wobei eine Spülwasserleitung (53) vorgesehen ist, eingerichtet Spülwasser von der Mikrofiltrationseinheit in den Vorratstank (52) abzuleiten.

11. Milchentkeimungsanlage nach mindestens einem der Ansprüche 8 bis 10,
**dadurch gekennzeichnet, dass**
die Mikrofiltrationseinheit mindestens eine, bevorzugt zwei, cross-flow Filtrationseinheiten (14) umfasst.

12. Milchentkeimungsanlage nach mindestens einem der Ansprüche 8 bis 11,
**dadurch gekennzeichnet, dass**
die Milchentkeimungsanlage einen Rahmerhitzer (26) umfasst, wobei eine Retentatleitung (24) vorgesehen ist, eingerichtet, ein Filterretentat der Mikrofiltrationseinheit (14) in den Rahmerhitzer (26) abzuleiten, wobei der Rahmerhitzer (26) eingerichtet ist, das Filterretentat zusammen mit Rahm zu erhitzen.

## Claims

1. Start-up method of a milk sterilization system comprising the method steps:
- rinsing the milk sterilization system with rinsing water, wherein a liquid flow flows through a separator (5) and a downstream pasteurization unit (34),
- subsequently introducing milk (1) into the milk sterilization system upstream of the separator (5) for replacing the rinsing water,
- subsequently discharging the milk into a microfiltration unit (14) at a branching valve (15) between the separator (5) and the pasteurization unit (34), and
- subsequently introducing microfiltrated milk from the microfiltration unit (14) into the milk sterilization system at a milk feed (22) downstream of the branching valve (15) and upstream of the pasteurization unit (34) by opening at least one permeate valve (40), **characterized in that,** during discharge, a replacement liquid, preferably water, is introduced into the milk sterilization system between the branching valve (15) and the pasteurization unit (34) by means of a replacement liquid supply valve (50), such that the liquid flow through the pasteurization unit (34) is maintained, wherein the supply of replacement liquid is terminated with introduction of the microfiltrated milk into the milk sterilization system at the milk feed (22) by closing the replacement liquid supply valve (50).

2. Start-up method according to claim 1, **characterized in that** the water that is rinsed through the microfiltration unit (14) is drained off from the microfiltration unit (14) prior to discharge of the milk into the microfiltration unit (14).

3. Start-up method according to at least one of the claims 1 and 2, **characterized in that** discharge of the milk into the microfiltration unit (14) and simultaneous supply of replacement liquid into the milk sterilization system is realized directly after arrival of the milk, introduced to replace the rinsing water, at the branching valve (15).

4. Start-up method according to claim 3, **characterized in that** the arrival is detected by means of a turbidity guard (60).

5. Start-up method according to at least one of the claims 1 through 4, **characterized in that** the replacement liquid is supplied from a storage tank (52).

6. Start-up method according to at least one of the claims 1 through 5, **characterized in that** the microfiltrated milk is introduced into the milk sterilization system at the milk feed (22) after the microfiltration unit (14) has been completely filled with milk.

7. Start-up method according to at least one of the claims 1 through 6, **characterized in that** the permeate valve (40) is opened and the replacement liquid supply valve (50) is closed with valve opening and closing times of a few minutes.

8. Milk sterilization system designed to perform the start-up method according to at least one of the claims 1 through 7, comprising
- a separator (5) and a downstream pasteurization unit (34), and
- a branching valve (15) between the separator (5) and the pasteurization unit (34), designed to discharge milk (1) introduced into the milk sterilization system upstream of the separator (5) into a preferably drained-off microfiltration unit (14) after rinsing the separator (5) and the pasteurization unit (34) with a rinsing water flow in order to replace the rinsing water, and
- a milk feed (22) disposed downstream of the branching valve (15) and upstream of the pasteurization unit (34) and designed to introduce microfiltrated milk from the microfiltration unit (14) into the milk sterilization system by opening at least one permeate valve (40),
**characterized in that**
a replacement liquid supply valve (50) and a control module (54) are provided, wherein the control module (54) is designed to control the branching valve (15) and the replacement liquid supply valve (50) in such a fashion that, while the milk is being discharged into the microfiltration unit (14), a replacement liquid, preferably water, can be supplied into the milk sterilization system between the branching valve (15) and the pasteurization unit (34) by means of the replacement liquid supply valve (50) such that the liquid flow through the pasteurization unit (34) can be maintained, wherein the supply of replacement liquid can be terminated with introduction of the microfiltrated milk into the milk sterilization system at the milk feed (22) by closing the replacement liquid supply valve (50).

9. Milk sterilization system according to claim 8, **characterized in that** the control module (54) is designed to discharge the milk into the microfiltration unit (14) and at the same time supply the replacement liquid into the milk sterilization system directly after arrival of the milk at the branching valve (15), which is introduced to replace the rinsing water, preferably, wherein a turbidity guard (60) is provided designed to detect the arrival of the milk.

10. Milk sterilization system according to at least one of the claims 8 and 9, **characterized in that** a storage tank (52) is provided, wherein the replacement liquid can be supplied from a storage tank (52), preferably wherein a rinsing water line (53) is provided, which is designed to discharge rinsing water from the microfiltration unit into the storage tank (52).

11. Milk sterilization system according to at least one of the claims 8 through 10, **characterized in that** the microfiltration unit comprises at least one, preferably two, cross-flow filtration units (14).

12. Milk sterilization system according to at least one of the claims 8 through 11, **characterized in that** the milk sterilization system comprises a cream heater (26), wherein a retentate line (24) is provided, which is designed to discharge a filter retentate of the microfiltration unit (14) into the cream heater, wherein the cream heater (26) is designed to heat the filter retentate together with the cream.

## Revendications

1. Procédé de mise en fonction d'une installation de stérilisation de lait, comprenant les étapes opératoires suivantes :
- rinçage de ladite installation de stérilisation de lait à l'aide d'eau de rinçage, un séparateur (5), et une unité de pasteurisation (34) succédant à ce dernier, étant parcourus par un flux de liquide,
- admission consécutive de lait (1) dans ladite installation de stérilisation, en amont dudit séparateur (5), en vue de remplacer l'eau de rinçage,
- dérivation consécutive du lait vers une unité de microfiltration (14), au niveau d'une vanne de bifurcation (15) entre ledit séparateur (5) et ladite unité de pasteurisation (34), et
- admission consécutive, dans ladite installation de stérilisation, de lait microfiltré provenant de ladite unité de microfiltration (14), par ouverture d'au moins une vanne (40) à perméat, au niveau d'une arrivée (22) de lait située après la vanne de bifurcation (15) et avant l'unité de pasteurisation (34),
**caractérisé par le fait que**,
en simultanéité avec la dérivation, un liquide de substitution, de préférence de l'eau, est délivré à l'installation de stérilisation de lait entre la vanne de bifurcation (15) et l'unité de pasteurisation (34), au moyen d'une vanne (50) de délivrance de liquide de substitution, de façon à entretenir le flux de liquide parcourant ladite unité de pasteurisation (34), sachant qu'il est mis un terme à la délivrance dudit liquide de substitution, par fermeture de ladite vanne de délivrance (50), alors même que le lait microfiltré est admis dans ladite installation de stérilisation, au niveau de l'arrivée (22) de lait.

2. Procédé de mise en fonction selon la revendication 1,
**caractérisé par le fait que**
de l'eau, rinçant l'unité de microfiltration (14), est évacuée de ladite unité de microfiltration (14) préalablement à la dérivation du lait vers ladite unité de microfiltration (14).

3. Procédé de mise en fonction selon au moins l'une des revendications 1 à 2,
**caractérisé par le fait que**
la dérivation du lait vers l'unité de microfiltration (14), et la délivrance simultanée du liquide de substitution à l'installation de stérilisation de lait, sont effectuées directement après arrivée du lait admis en vue de remplacer l'eau de rinçage, au niveau de la vanne de bifurcation (15).

4. Procédé de mise en fonction selon la revendication 3,
**caractérisé par le fait que**
l'arrivée est détectée au moyen d'un contrôleur de turbidité (60).

5. Procédé de mise en fonction selon au moins l'une des revendications 1 à 4,
**caractérisé par le fait que**
le liquide de substitution est délivré à partir d'un réservoir de stockage (52).

6. Procédé de mise en fonction selon au moins l'une des revendications 1 à 5,
**caractérisé par le fait que**
l'admission du lait microfiltré dans l'installation de stérilisation de lait est effectuée, au niveau de l'arrivée (22) de lait, après que l'unité de microfiltration (14) a été intégralement emplie de lait.

7. Procédé de mise en fonction selon au moins l'une des revendications 1 à 6,
**caractérisé par le fait que**
l'ouverture de la vanne (40) à perméat, et la fermeture de la vanne (50) de délivrance de liquide de substitution, s'opèrent avec des temps d'ouverture et de fermeture desdites vannes qui représentent quelques minutes.

8. Installation de stérilisation de lait, conçue pour l'application du procédé de mise en fonction selon au moins l'une des revendications 1 à 7, comprenant
- un séparateur (5) et une unité de pasteurisation (34) succédant à ce dernier,
- une vanne de bifurcation (15) qui, située entre ledit séparateur (5) et ladite unité de pasteurisation (34), est conçue pour dériver, vers une unité de microfiltration (14) de préférence vidée, du lait (1) admis dans ladite installation de stérilisation en amont dudit séparateur (5), en vue de remplacer l'eau de rinçage, après un rinçage dudit séparateur (5) et de ladite unité de pasteurisation (34) par un flux de liquide constitué d'eau de rinçage, et
- une arrivée (22) de lait qui, située après ladite vanne de bifurcation (15) et avant ladite unité de pasteurisation (34), est conçue pour admettre dans ladite installation de stérilisation, par ouverture d'au moins une vanne (40) à perméat, du lait microfiltré provenant de ladite unité de microfiltration (14),
**caractérisée par**
la présence d'un module de commande (54) et d'une vanne (50) de délivrance de liquide de substitution, ledit module de commande (54) étant conçu pour piloter la vanne de bifurcation (15), et ladite vanne de délivrance (50), de telle sorte qu'il soit possible à l'aide de ladite vanne de délivrance (50), en simultanéité avec la dérivation du lait vers l'unité de microfiltration (14), de délivrer un liquide de substitution, de préférence de l'eau, à l'installation de stérilisation de lait entre ladite vanne de bifurcation (15) et l'unité de pasteurisation (34), de façon à pouvoir entretenir le flux de liquide parcourant ladite unité de pasteurisation (34), sachant qu'il peut être mis un terme à la délivrance dudit liquide de substitution, par fermeture de ladite vanne de délivrance (50), alors même que le lait microfiltré est admis dans ladite installation de stérilisation, au niveau de l'arrivée (22) de lait.

9. Installation de stérilisation de lait, selon la revendication 8,
**caractérisée par le fait que**
le module de commande (54) est conçu pour exécuter la dérivation du lait vers l'unité de microfiltration (14), et la délivrance simultanée du liquide de substitution à ladite installation de stérilisation de lait, aussitôt après que le lait, admis en vue du remplacement de l'eau de rinçage, est arrivé au niveau de la vanne de bifurcation (15), sachant qu'il est prévu, de préférence, un contrôleur de turbidité (60) conçu pour détecter l'arrivée du lait.

10. Installation de stérilisation de lait, selon au moins l'une des revendications 8 à 9,
**caractérisée par**
la présence d'un réservoir de stockage (52), le liquide de substitution pouvant être délivré à partir d'un réservoir de stockage (52) en prévoyant, de préférence, un conduit (53) d'eau de rinçage qui est conçu pour dériver de l'eau de rinçage vers ledit réservoir de stockage (52), à partir de l'unité de microfiltration.

11. Installation de stérilisation de lait, selon au moins l'une des revendications 8 à 10,
**caractérisée par le fait que**
l'unité de microfiltration compte au moins une, de préférence deux unité(s) de filtration (14) à écoulement transversal.

12. Installation de stérilisation de lait, selon au moins l'une des revendications 8 à 11,
**caractérisée par le fait que**
ladite installation de stérilisation renferme un réchauffeur de crème (26), sachant qu'il est prévu un conduit (24) de rétentat qui est conçu pour dériver, vers ledit réchauffeur de crème (26), un rétentat de filtration de l'unité de microfiltration (14), ledit réchauffeur de crème (26) étant conçu pour réchauffer ledit rétentat de filtration conjointement à de la crème.
